# EUROPÄISCHE PATENTSCHRIFT

(11) **EP 1 978 321 B1**
(45) Veröffentlichungstag und Bekanntmachung des Hinweises auf die Patenterteilung: **27.12.2017**
(21) Anmeldenummer: 08006100.5
(22) Anmeldetag: 28.03.2008
(51) Int. Cl.: F27B 17/02

(54) **Muffelerkennung**
Muffle detection
Détection de moufle

(30) Priorität: 30.03.2007 DE 102007015435
(43) Veröffentlichungstag der Anmeldung: 08.10.2008
(73) Patentinhaber: Ivoclar Vivadent AG, 9494 Schaan (LI)
(72) Erfinder: Rudolf Jussel, A-6806 Feldkirch-Tosters (AT)
(74) Vertreter: Baronetzky, Klaus

(56) Entgegenhaltungen:
- EP-A- 0 438 802
- EP-A- 1 127 555
- EP-A- 1 915 972
- WO-A-03/011168
- DE-A1- 3 146 391
- DE-A1- 10 313 406
- DE-A1- 19 844 136
- DE-B3- 10 327 892
- DE-C1- 19 606 493
- DE-U1-202006 004 578
- US-B1- 6 303 059

## Beschreibung

Die Erfindung betrifft ein Verfahren zum Betrieb eines Dentalbrennofen, gemäß dem Oberbegriff von Anspruch 1.
Aus der DE 33 15 835 C2 ist ein Vakuum-Druckgießgerät bekannt, das einen Tiegel mit Schmelzgut verwendet. Über ein seitlich angebrachtes Thermoelement sollen Temperaturänderungen erfasst werden, die durch das Schmelzgut verursacht werden, auch wenn lediglich kleine Mengen an Schmelzgut eingebracht werden.
Zwar strebt diese vorgestellte Lösung die Realisierung einer schnellen Anpassung der Brennofentemperatur über einen Hauptregleer und einen Hilfsregler an, wobei auch ein Überhitzungsschutz eingebaut ist. Diese Lösung ist jedoch im Grunde nicht geeignet, wenn abgesehen von der Menge des angebrachten zu schmelzenden Materials auch dessen Temperatur unterschiedlich ist.
Ferner ist es aus der DE 196 06 493 C1 an sich bekannt, die Temperatur des Brennguts bei einem Dentalbrennofen auch in unmittelbarer Nähe zu dem Brenngut zu messen. Bei dieser Lösung ist es vorgesehen, das Brenngut zum Abgleich der Solltemperatur mit der Isttemperatur längs eines Temperaturgradienten zu verfahren. Dies bedingt jedoch eine entsprechende Erschütterung des Brennguts, die in manchen Fällen nicht wünschenswert ist. Insbesondere ist diese Lösung auch nicht geeignet, wenn ein Pressofen eingesetzt wird, denn durch den Pressstempel, der in der Ofenhaube eingebaut ist, ist dann der Ort, an welcher sich die Muffel als Trägervorrichtung für das Brenngut befinden muss, fixiert.

Ferner ist es an sich bereits vorgeschlagen worden, die gemessenen Temperaturen über eine recht komplizierte Steuervorrichtung auszuwerten und die Brenntemperatur an die Erfordernisse anzupassen. Beispielsweise sind die Sintertemperaturen bei unterschiedlichen Keramikmaterialien, aus denen Dentalrestaurationsteile hergestellt werden, unterschiedlich, und die Sinterbrände müssen mit einem anderen Temperaturprofil ablaufen als beispielsweise ein Glanzbrand. Auch ist es bekannt geworden, die Brennkurve graphisch darzustellen, um dem Dentaltechniker bessere Informationen an die Hand zu geben. Solche Verfahren zum Steuerung eines Dentalofens sind beziehungsweise aus EP-A 0 438 802 und WO-A 03 011 168 bekannt. Schließlich ist es auch bekannt geworden, Vorwärmeöfen einzusetzen, die die Keramikrohlinge auf die je gewünschte Temperatur, die je nach Keramik unterschiedlich sein kann, vorzuwärmen. Die vorbereitete Muffel kann sich so auf die Vorwärmtemperatur einstellen, so dass die Temperaturgradienten im eigentlichen Pressofen während des Pressens reduziert sind. Hierbei können jedoch nicht nur die Muffelgrößen selbst unterschiedlich sein, sondern es können auch unterschiedliche Keramiken verwendet werden, so dass je eine recht komplizierte Anpassung zur Einstellung des optimalen Temperaturprofils für den Sinterbrand erforderlich ist. Diesen unterschiedlichen Anforderungen kann mit den bisher bekannten Öfen nur im unzureichenden Masse Rechnung getragen werden.

Daher liegt der Erfindung die Aufgabe zugrunde, ein Verfahren zum Betrieb eines Dentalbrennofen gemäß dem Oberbegriff von Anspruch 1 zu schaffen, der gerade auch für die Verwendung in Verbindung mit Vorwärmöfen besonders gut geeignet ist.
Diese Aufgabe wird erfindurigsgemäß durch Anspruch 1 gelöst. Vorteilhafte Weiterbildungen ergeben sich aus den Unteransprüche. Erfindungsgemäß ist es vorgesehen, die physikalische Größe mindestens der Muffel bzw. des dort einsetzbaren Keramikrohlings, wobei die Muffel als Trägervorrichtung eingesetzt wird, zu erfassen und basierend hierauf ein Verarbeitungsprogramm des Dentalbrennofens einzustellen, also gleichsam automatisch eine Optimierung vorzunehmen. Es versteht sich, dass die übrigen Ofenparameter, wie beispielsweise die Größe des Brennraums, bei der Auswahl des Verarbeitungsprogramms berücksichtigt werden müssen, und der Dentalbrennofen im übrigen hinsichtlich der Temperaturmessung in an sich bekannter Weise kalibriert ist.

Besonders günstig ist es, wenn die Größe der Trägervorrichtung, die ihre Masse insofern auch einschließt, bei der Wahl des Verarbeitungsprogramms berücksichtigt wird. Hiermit lässt sich verhindern, dass eine zu rasche Aufheizung des Keramikrohlings und der Muffel realisiert wird, die zu Spannungsrissen führen kann, aber auch dass eine zu langsamen Aufheizung vorgenommen wird, die die Zykluszeit unnötig verlängert.

Beispielsweise wird nach dem Einführen der mit dem Keramikrohling ausgestatteten Muffel aus dem Vorwärmofen in den Dentalbrennofen eine vorgegebene Heizleistung für einen definierten Zeitraum zugeführt. Die hierdurch realisierte Temperaturerhöhung der Muffel wird erfasst. Bei einer schnelleren Erwärmung der Muffel kann dementsprechend festgestellt werden, dass eine Muffel mit entsprechend geringerer Wärmekapazität, also geringerer Muffelgröße, vorliegt, während bei einer längeren Aufheizzeit oder einer geringeren Temperaturerhöhung davon ausgegangen werden kann, dass eine Muffel mit einer größeren Wärmekapazität vorliegt.

Es kann basierend auf dieser Erkenntnis dementsprechend die Heizleistung für den eigentlichen Sintervorgang bzw. Pressvorgang optimiert werden, so dass also bei einer größeren Muffel automatisch mehr Heizleistung zur Bereitstellung der gleichen Temperaturerhöhung pro Zeit als bei einer kleineren Muffel eingeleitet wird.

Der erfindungsgemäße Dentalbrennofen ist insofern für die automatische Erfassung oder Muffelerkennung auch bei sehr unterschiedlichen Muffelgrößen geeignet, wobei beispielsweise auch ein Faktor 3 der Muffelgröße ohne Weiteres abdeckbar ist.

Die erfindungsgemäße Lösung erlaubt es auch, die Abkühlung zu kompensieren, die beim Umsetzen von dem Vorwärmbrennofen in den Dentalbrennofen vonstatten geht. Die Zeit, in der die Abkühlung auftritt, und dementsprechend das Ausmass der Abkühlung, hängt einerseits von der Muffelgröße ab, andererseits von der Entfernung zwischen Vorwärmofen und Dentalbrennofen, und schließlich auch von der Arbeitsgeschwindigkeit des Zahntechnikers. Erfindungsgemäß besonders günstig ist es, wenn ein entsprechend angepasstes Solltemperaturprofil bereitgestellt wird, das mit einer kürzeren Vorwärmzeit auskommt, so dass sich die Zykluszeit insgesamt reduziert.

Erfindungsgemäß besonders günstig ist es, wenn ein Thermosensor eingesetzt wird, der die Temperatur der Oberfläche der Trägervorrichtung, insbesondere also der Muffel, gezielt erfasst, bevorzugt, ohne diese zu berühren. Eine derartige Erfassung erlaubt die von der Wandtemperatur des Dentalbrennofens unabhängige Ermittlung der Muffeltemperatur.

Der erfindungsgemäße Sensor ist nicht auf die Verwendung eines Thermosensors beschränkt. Vielmehr lässt sich vorteilhaft auch ein Größensensor oder ein Gewichtssensor einsetzen, der die Trägervorrichtung, ggf. also die Muffel, hinsichtlich ihrer Größe und/oder ihres Gewichts erfasst.

In vorteilhafter Ausgestaltung ist es vorgesehen, auch den eingebrachten Unterdruck und/oder die Pressvorrichtung in die Überwachung einzubeziehen. Beispielsweise kann der von der Pressvorrichtung zurückgelegte Weg und/oder eine Druckänderung erfasst werden, um das Schmelzen des Keramikrohlings und den Pressfortschritt zu überwachen.

Über den Sensor kann nicht nur die Temperatur, der in Verbindung mit einer Auswerteeinrichtung der Auswahl des Verarbeitungsprogramms dient, sondern auch der Temperaturverlauf, oder aber beispielsweise auch ein Temperaturgradient, also der Temperaturunterschied zwischen zwei Stellen in dem Innenraum des Dentalbrennofens, oder aber auch eine Temperaturänderung im Brennraum nach dem Einbringen der Muffel erfasst werden.

Die Erfindung ist auch nicht auf die Realisierung eines Dentalbrennofens mit Pressvorrichtung, eines sog. Pressofens, beschränkt. Vielmehr kann auch ein druckfreier Dentalbrennofen oder ein Dentalgießofen erfindungsgemäß ausgestattet sein.

In vorteilhafter Ausgestaltung der Erfindung ist es vorgesehen, dass ein Wegmesssystem, z.B. Pulserfassung eines Schrittmotors oder eines Potentiometers, vorgesehen ist, über welches die Distanz zwischen einer Ausgangsstellung der Pressvorrichtung und des in der Muffel eingesetzten Keramikrohlings erfasst wird, sowie bei in den Brennraum eingebrachter Muffel zur weiteren Erhöhung der Brennraumtemperatur erfasst wird, die die zusätzlich eingebrachte Wärmemenge innerhalb eines bestimmten Zeitraumes führt.

Das Wegmesssystem kann durch die Erfassung einer zurückgelegten Wegstrecke des Schrittmotors für die Pressvorrichtung realisiert werden, und die Druckerfassung der Pressvorrichtung kann auch durch die Messung des Antriebsstroms des Motors realisiert werden.

Bei dieser Lösung ist es auch möglich, zu erfassen, wie lang der Keramikrohling ist - oder ggf. zwei übereinander eingesetzte Keramikrohlinge - sind. Auch insofern lässt sich erfindungsgemäß eine automatische Anpassung des Verarbeitungsprogramms realisieren.

Ferner ist es vorgesehen, dass das Verarbeitungsprogramm des Dentalbrennofens einen Vorwärmabschnitt aufweist, der über die erfasste physikalische Größe einstellbar ist. Bei dieser Lösung kann dann der eigentliche Sintervorgang bzw. Pressvorgang in der optimierten Weise realisiert werden, während während des Vorwärmabschnitts die Unterschiede zwischen den einzelnen Muffeln oder sonstigen Trägervorrichtungen konvergiert werden.

Ferner kann es günstig sein, die Temperatur des Dentalbrennofens während des Vorwärmens auf eine Solltemperatur der Muffel am Ende des Vorwärmabschnitts zu steuern, oder beispielsweise um eine geringe Temperaturdifferenz unterhalb oder oberhalb dieser Temperatur. Damit sind die optimiert stets ähnlichen Aussgangsbedingungen für den eigentlichen Brennzyklus vorhanden.

Andererseits lässt sich der Unterschied zwischen verschiedenen Muffeln automatisch dann stets am besten erkennen, wenn die Temperaturdifferenz beträchtlich ist, da dann die Reaktionszeit je nach Muffelgröße unterschiedlich ausfällt.

Erfindungsgemäß ist es ferner besonders günstig, wenn die spezifische Wärmekapazität der relevanten Teile der Brennraumhaube in die Berechnung einbezogen wird. Hierbei ist insbesondere der Teil der Brennraumhaube zu berücksichtigen, der sich zwischen der Heizvorrichtung und der Muffel erstreckt, also beispielsweise eine Quarzglasabdeckung.

In einer weiteren vorteilhaften Ausgestaltung ist es vorgesehen, dass der Dentalbrennofen die erfasste physikalische Größe das Verarbeitungsprogramm unmittelbar und insbesondere automatisch beeinflusst, insbesondere eine mittelbare oder eine unmittelbare Größenerkennung einer Muffel ergibt.

In einer weiteren vorteilhaften Ausgestaltung ist es vorgesehen, dass die Temperaturdifferenz zwischen dem Brennraum und der Trägervorrichtung erfasst wird und basierend auf der Änderungsgeschwindigkeit der Temperatur der Trägervorrichtung die Wärmekapazität der Trägervorrichtung erfasst wird.

In einer weiteren vorteilhaften Ausgestaltung ist es vorgesehen, dass ein Sensor im Dentalbrennofen die physikalische Größe erfasst und an eine Steuervorrichtung weiterleitet, die das Verarbeitungsprogramm des Dentalbrennofens automatisch in Abhängigkeit von der erfassten Größe steuert.
In einer weiteren vorteilhaften Ausgestaltung ist es vorgesehen, dass die Muffel in einem Vorwärmofen erwärmt wird und bei einer vorgegebenen Temperatur in den Dentalbrennofen eingesetzt wird. Gemäß der Erfindung laut Anspruch 1 ist es vorgesehen, dass der Dentalbrennofen vor dem Einsetzen der vorgewärmten Muffel auf einer Bereitschaftstemperatur gehalten wird und nach Einsetzen der Muffel die Änderungsgeschwindigkeit der Temperatur des Brennraums und erfasst wird. In einer weiteren vorteilhaften Ausgestaltung ist es vorgesehen, dass die Muffel mit einer Temperatur in den Brennraum eingesetzt wird, die von der Bereitschaftstemperatur des Dentalbrennofens divergiert, insbesondere größer als diese ist.
In einer weiteren vorteilhaften Ausgestaltung ist es vorgesehen, dass die Temperaturdifferenz zwischen dem Brennraum und der in einem Vorwärmofen vorgewärmten Muffel erfasst wird und basierend auf der Änderungsgeschwindigkeit der Temperatur im Brennraum die Wärmekapazität der Muffel erfasst wird.
In einer weiteren vorteilhaften Ausgestaltung ist es vorgesehen, dass die Relativtemperatur zwischen dem Brennraum und der vorgewärmten Muffel gemessen und die Änderungsgeschwindigkeit der Brennraumtemperatur im Verhältnis zu der genannten Temperaturdifferenz als physikalische Größe verwendet wird.
In einer weiteren vorteilhaften Ausgestaltung ist es vorgesehen, dass wenigstens zwei verschiedene Muffelgrößen, einsetztbar sind, und das Verarbeitungsprogramm automatisch auf jene Muffelgröße eingestellt wird, die der gemessenen Muffelgröße am nächsten kommt.

In einer weiteren vorteilhaften Ausgestaltung ist es vorgesehen, dass ein Drucksensor vorgesehen ist, über welchen die Nachgiebigkeit des in die Muffel eingebrachten, von der Pressvorrichtung mit Druck beaufschlagtem Keramikrohling erfasst und in Abhängigkeit hiervon die Einstellung des Verarbeitungsprogramms vorgenommen wird.

In einer weiteren vorteilhaften Ausgestaltung ist es vorgesehen, dass ein Wegmesssystem, z.B. die Pulserfassung eines Schrittmotors oder ein Potentiometer, vorgesehen ist, über welches der zwischen einer Ausgangsstellung der Pressvorrichtung und der aktuellen Position des Pressstempels bei in der Muffel eingesetztem unverpressten Keramikrohling erfasst wird.

In einer weiteren vorteilhaften Ausgestaltung ist es vorgesehen, dass die Brennraumtemperatur des Dentalbrennofens einerseits vor dem Einsetzen der Muffel und andererseits nach dem Einsetzen der Muffel, insbesondere in einem vorgegebenen Zeitpunkt nach dem Einsetzen der Muffel, erfasst wird und aus der Temperaturänderung und/oder dem Temperaturänderungsgradienten die Größe der Muffel bestimmt wird.

In einer weiteren vorteilhaften Ausgestaltung ist es vorgesehen, dass bei in den Brennraum eingebrachter Muffel zur weiteren Erhöhung der Brennraumtemperatur die von dem Dentalbrennofen erzeugte, zusätzlich eingebrachte Wärmemenge innerhalb eines bestimmten Zeitraumes erfasst wird.

Weitere Vorteile, Einzelheiten und Merkmale ergeben sich aus der nachfolgenden Beschreibung zweier Ausführungsbeispiele anhand der Zeichung.

Es zeigen:
- Fig. 1: in schematischer Darstellung einen Pressofen als eine Ausführungsform eines erfindungsgemäßen Dentalbrennofens, in teilweise aufgebrochener Darstellung; und
- Fig. 2: einen drucklosen Dentalbrennofen, in einer weiteren Ausführungsform eines erfindungsgemäßen Dentalbrennofens, ebenfalls teilweise aufgebrochen dargestellt.

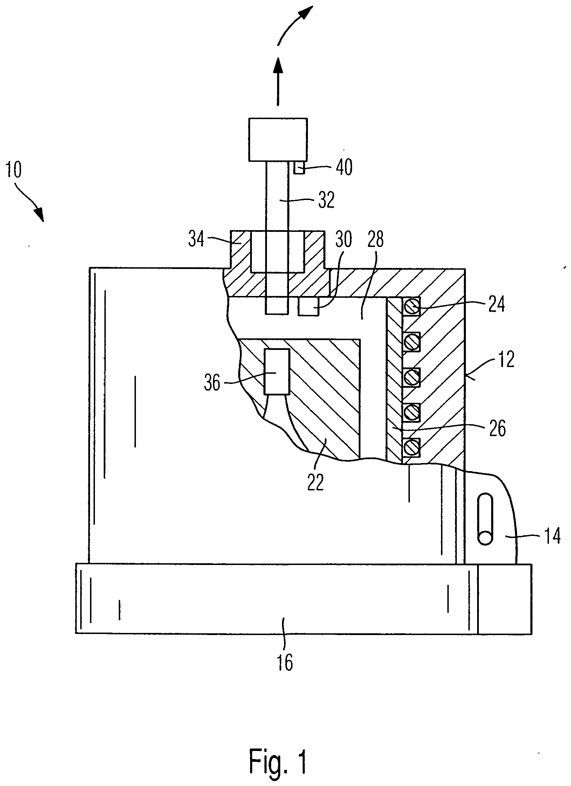

Der in Fig. 1 dargestellte Dentalbrennofen 10 weist eine Ofenhaube 12 auf, die über ein Gelenk 14 in an sich bekannter Weise von einer Bodenplatte 16 entfernbar ist. Bevorzugt ist eine Hub-/Schwenkbewegung möglich, wie es an sich bekannt ist. Die Bodenplatte 16 nimmt eine Trägervorrichtung 20 auf, wobei eine Muffel 22 als Trägervorrichtung eingesetzt ist.
Die Ofenhaube 12 nimmt in ihrer Seitenwand eine Heizvorrichtung 24 auf, die über einen Quarzrohr 26 abgedeckt ist. Die Heizvorrichtung 24 dient der Aufheizung eines Brennraums 28, in dem die Muffel 22 eingebracht ist.
Erfindungsgemäß ist ein lediglich schematisch ersichtlicher Temperatursensor 30 vorgesehen, der mit einem nicht dargestellten Drucksensor kombiniert sein kann. Der Drucksensor erfasst bei dieser Ausführungsform den von einer Pressvorrichtung 32 über einen Pressstempel 34 auf den Keramikrohling 36 aufgebrachten Druck. Zusätzlich ist bei dieser Ausführungsform ein Wegsensor 40 vorgesehen, der erfasst, wie sich der Pressstempel 34 der Pressvorrichtung 32 nach unten bewegt.
Für den Betrieb des erfindungsgemäßen Dentalbrennofens 10 wird der Dentalbrennofen 10 zunächst auf eine bestimmte Temperatur geheizt, beispielsweise auf 800°C. Eine Muffel 22 mit bereits eingebrachten Keramikrohling 36 wird in einem Vorwärmofen, der hier nicht dargestellt ist, vorgewärmt, beispielsweise auf 700°C.

Für den Beginn des eigentlichen Pressvorgangs wird die Muffel 22 dem Vorwärmofen entnommen und in den Dentalbrennofen 10 nach Öffnen der Ofenhaube 12 eingebracht, worauf die Ofenhaube 12 rasch wieder geschlossen wird. Durch den Transport verliert die Muffel etwas Temperatur, so dass sie beispielsweise an ihrer Oberfläche, die über dem Temperatursensor 30 erfasst wird, eine Temperatur von 660° hat.

Der Dentalbrennofen 10 wird nun zunächst für einen zugegebenen Zeitraum von beispielsweise 60 Sek. auf der im Bereich der Heizvorrichtung 12, also auf dem Quarzrohr 26, auf eine Temperatur von 700°C gehalten. Durch den Einfluss der relativ kühlen Muffel 22 kann diese Temperatur auch ebenfalls etwas sinken (Temperaturdifferenz in etwa 40°C).

Es wird dann gemessen, welche Temperatur an der Oberfläche der Muffel 22 sich nach 60 Sek. eingestellt hat. Je nach Temperaturgröße wird dann darauf geschlossen, welche Masse die Muffel 22 hat, und basierend hierauf wird das geeignete Brennprogramm ausgewählt. Hierbei wird erfindungsgemäß die Tatsache günstig ausgenutzt, dass typischerweise große Muffeln bei größeren Dentalrestaurationen zum Einsatz gelangen, die ggf. auch die Verwendung von zwei oder drei Keramikrohlingen erfordern, die nacheinander, also übereinander, in den Muffelkanal eingeführt sind.

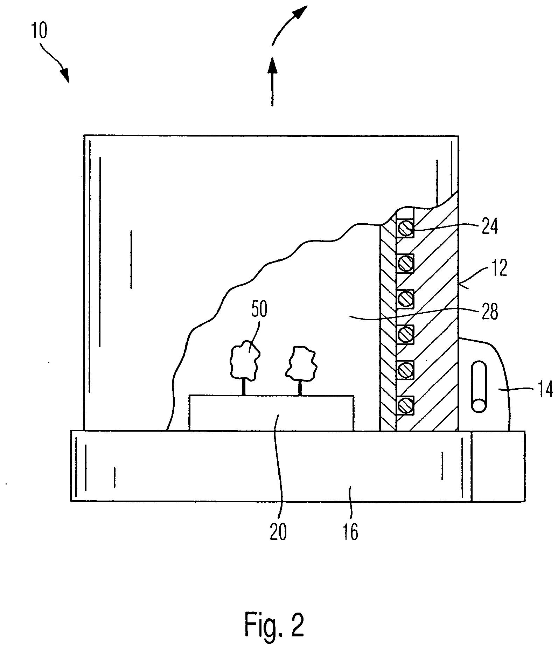

Ein ähnliches erfindungsgemäßes Betriebsverfahren lässt sich auch bei einem pressvorrichtungsfreien Dentalbrennofen 10 gemäß Fig. 2 realisieren. Gleiche Bezugszeichen weisen hier auf gleiche Teile hin. Das dentale Restaurationsteil 50 ist bei dieser Ausführungsform in an sich bekannter Weise auf einer Trägervorrichtung 20 aufgenommen. Seine Masse entscheidet hier zusammen mit der Trägervorrichtung 20 über die Reaktion oder Sprungantwort auf das Einbringen, so dass auch hier das geeignete Brennprofil für die optimierte Sinterung des Dentalrestaurationsteils 50 vorgesehen sein kann.

## Patentansprüche

1. Verfahren zum Betrieb eines Dentalbrennofen, mit einem Brennraum (28), wenigstens einer in den Brennraum (28) einbringbaren Muffel (22) als Trägervorrichtung (20) für Dentalmaterial, einer Pressvorrichtung (32) zum Verpressen eines in der Muffel (22) eingesetzten Keramikrohlings (36) und einem Sensor zur Erfassung mindestens einer physikalischen Größe, **dadurch gekennzeichnet, dass**
die in einem Vorwärmofen vorgewärmte Muffel (22) in den Brennraum (28), der auf einer Bereitschaftstemperatur gehalten wird, eingesetzt wird,
nach dem Einsetzen der Muffel (22) die Änderungsgeschwindigkeit der Temperatur des Brennraumes (28) als die mindestens eine physikalische Größe erfasst wird,
wobei auf der Basis der erfassten mindestens einen physikalischen Größe die Einstellung eines Verarbeitungsprogramms des Dentalofens (10) erfolgt und dieses Verarbeitungsprogramm abhängig von der mindestens einen erfassten physikalischen Größe automatisch beeinflusst wird.

2. Verfahren nach Anspruch 1, **dadurch gekennzeichnet, dass** die erfasste physikalische Größe eine mittelbare oder eine unmittelbare Größenerkennung der Muffel (22) ergibt.

3. Verfahren nach einem der Ansprüche 1 oder 2, **dadurch gekennzeichnet, dass**
die Temperaturdifferenz zwischen dem Brennraum (28) und der Muffel (20) erfasst wird und basierend auf der Änderungsgeschwindigkeit der Temperatur der Muffel (20) die Wärmekapazität der Muffel (20) erfasst wird.

4. Verfahren nach einem der vorhergehenden Ansprüche, **dadurch gekennzeichnet, dass** s basierend auf der Änderungsgeschwindigkeit der Temperatur im Brennraum (28) die Wärmekapazität der Muffel (22) erfasst wird.

5. Verfahren nach einem der vorhergehenden Ansprüche, **dadurch gekennzeichnet, dass** die physikalische Größe mittels eines Sensors im Dentalbrennofen (10) erfasst und an eine Steuervorrichtung weitergeleitet wird, zur automatischen Steuerung des Verarbeitungsprogramms des Dentalbrennofens (10) in Abhängigkeit von der erfassten Größe.

6. Verfahren nach Anspruch 1, **dadurch gekennzeichnet, dass** die Muffel (22) nach Erwärmung in einem Vorwärmofen bei einer vorgegebenen Temperatur in den Dentalbrennofen eingesetzt wird.

7. Verfahren nach einem der vorhergehenden Ansprüche, **dadurch gekennzeichnet, dass** der Dentalbrennofen (10) vor dem Einsetzen der vorgewärmten Muffel (22) auf einer Bereitschaftstemperatur gehalten wird und nach Einsetzen der Muffel (22) die Änderung der Temperatur des Brennraums (28) und insbesondere auch die Änderungsgeschwindigkeit erfasst wird.

8. Verfahren nach einem der vorhergehenden Ansprüche, **dadurch gekennzeichnet, dass** die Muffel (22) vordem Einsetzen in dem Brennraum (28) eine Temperatur aufweist, die von der Bereitschaftstemperatur des Dentalbrennofens (10) divergiert, insbesondere größer als diese ist.

9. Verfahren nach einem der vorhergehenden Ansprüche, **dadurch gekennzeichnet, dass** die Relativtemperatur zwischen dem Brennraum (28) und der vorgewärmten Muffel (22) gemessen wird, wobei die Änderungsgeschwindigkeit der Brennraumtemperatur im Verhältnis zu der erfassten Temperaturdifferenz zwischen dem Brennraum (28) und der Muffel (20) als weitere physikalische Größe verwendet wird.

10. Verfahren nach einem der vorhergehenden Ansprüche, **dadurch gekennzeichnet, dass** wenigstens zwei verschiedene Muffelgrößen, einsetzbar sind, wobei das Verarbeitungsprogramm automatisch auf jene Muffelgröße eingestellt wird, die der gemessenen Muffelgröße am nächsten kommt.

11. Verfahren nach einem der vorhergehenden Ansprüche, **dadurch gekennzeichnet, dass** mittels eines Drucksensors die Nachgiebigkeit des in die Muffel (22) eingebrachten, von der Pressvorrichtung (32) mit Druck beaufschlagten Keramikrohlings (36) erfasst und in Abhängigkeit hiervon die Einstellung des Verarbeitungsprogramms vorgenommen wird.

12. Verfahren nach einem der vorhergehenden Ansprüche, **dadurch gekennzeichnet, dass** mittels eines Wegmesssystems die zwischen einer Ausgangsstellung der Pressvorrichtung (32) und der aktuellen Position des Pressstempels (34) bei in der Muffel (22) eingesetztem unverpresstem Keramikrohling (36) erfolgte Bewegung erfasst wird.

13. Verfahren nach einem der vorhergehenden Ansprüche, **dadurch gekennzeichnet, dass** die Brennraumtemperatur des Dentalbrennofens (10) einerseits vor dem Einsetzten der Muffel (22) und andererseits nach dem Einsetzen der Muffel (22), insbesondere in einem vorgegebenen Zeitpunkt nach dem Einsetzen der Muffel (22), erfasst wird und aus der Temperaturänderung und/oder dem Temperaturänderungsgradienten die Größe der Muffel (22) bestimmt wird.

14. Verfahren nach einem der vorhergehenden Ansprüche, **dadurch gekennzeichnet, dass** bei in den Brennraum (28) eingebrachter Muffel (22) zur weiteren Erhöhung der Brennraumtemperatur die von dem Dentalbrennofen erzeugte, zusätzlich eingebrachte Wärmemenge innerhalb eines bestimmten Zeitraumes erfasst wird.

## Claims

1. A process for operating a dental furnace having a firing chamber (28), at least one muffle (22) Insertable into the firing chamber (28) as a supporting means (20) for dental material, one pressing device (32) for pressing a ceramic blank (36) inserted into the muffle (22) and a sensor for acquiring at least one physical quantity, **characterized in that**
the muffle (22) preheated in a preheating oven is inserted into the firing chamber (28), which is maintained at a standby temperature,
following insertion of the muffle (22), the rate of change of the temperature of the firing chamber (28) Is defected as the at least one physical quantity,
wherein setting a processing program of the dental furnace (10) Is done based on the at least one physical quantity detected, and this processing program is automatically controlled depending of the at least one physical quantity.

2. The process according to claim 1, **characterized in that** the acquired physical quantity results in direct or indirect quantity recognition of the muffle (22).

3. The process according to one of the claims 1 or 2, **characterized in that** the temperature difference between the firing chamber (28) and the muffle (20) Is acquired and, based on the rate of change of the temperature of the muffle (20), the heat capacity of the muffle (20) is acquired.

4. The process according to one of the preceding claims, **characterized In that** based on the rate of change of the temperature in the firing chamber (28), the heat capacity of the muffle (22) Is acquired.

5. The process according to one of the preceding claims, **characterized in that** the physical quantity is acquired by means of a sensor in the dental furnace (10) and Is forwarded to a control device for automatic control of the processing program of the dental furnace (10), depending of the acquired quantity.

6. The process according to claim 1, **characterized in that** the muffle (22) following heating in a preheating oven at a preset temperature is inserted into the dental furnace.

7. The process according to one of the preceding claims, **characterized In that** the dental furnace (10), prior to inserting the preheated muffle (22), is maintained at a standby temperature and, following insertion of the muffle (22), the change of the temperature of the firing chamber (28) and, especially as well as the rate of change, Is acquired.

8. The process according to one of the preceding claims, **characterized in that** the muffle (22), prior to inserting into the firing chamber (28), has a temperature diverging from the of the dental furnace (10), and especially is larger than said standby temperature.

9. The process according to one of the preceding claims, **characterized in that** the relative temperature between the firing chamber (28) and the preheated muffle (22) is measured, wherein the rate of change of the firing chamber temperature in relation to the detected temperature difference between the firing chamber (28) and the muffle (20) is used as another physical quantity.

10. The process according to one of the preceding claims, **characterized in that** at least two different muffle sizes are insertable, wherein the processing program Is automatically set to that muffle size, which is closest to the muffle size measured.

11. The process according to one of the preceding claims, **characterized in that** resilience of the ceramic blank (36) inserted into the muffle (22), pressurized by the pressing device (32) Is acquired by means of a pressure sensor and setting of the processing program is done in dependence thereof.

12. The process according to one of the preceding claims, **characterized in that**, by way of path measuring system, the displacement occurred between the initial position of the pressing device (32) and the current position of the heading tool (34) in the non-compacted ceramic blank (36) inserted into the muffle (22) is acquired.

13. The process according to one of the preceding claims, **characterized in that** the firing chamber temperature of the dental furnace (10), on the one hand, is acquired prior to inserting the muffle (22) and, on the other hand, following inserting the muffle (22), especially at a predetermined point of time following inserting the muffle (22), and the size of the muffle (22) Is determined from the temperature change and/or the temperature change gradient.

14. The process according to one of the preceding claims, **characterized in that**, for further Increase of firing chamber temperature, the amount of heat generated by the dental furnace and additionally introduced therein Is acquired within a specified period of time, upon the muffle (22) being introduced into the firing chamber (28).

## Revendications

1. Procédé pour faire fonctionner un four dentaire, avec une chambre de combustion (28), au moins un moufle (22) destiné à être inséré dans la chambre de combustion, (28) comme dispositif de support (20) pour du matériau dentaire, un dispositif de pressage (32) pour presser un lingotin en céramique (36) inséré dans le moufle (22) et un capteur pour la détection d'au moins une grandeur physique, **caractérisé en ce que** le moufle (22) préchauffée dans un four de préchauffage est Inséré dans la chambre de combustion (28), maintenue à une température de veille, après l'insertion du moufle (22) le taux de variation de la température de la chambre de combustion (28) est détecté comme ladite au moins une grandeur physique, où le réglage d'un programme de traitement du four dentaire (10) se produit sur la base de ladite au moins une grandeur physique et ce programme de traitement est automatiquement influencé en fonction de ladite au moins une grandeur physique détectée.

2. Procédé selon la revendication 1, **caractérisé en ce que** la grandeur physique détectée résulte en une détection directe ou indirecte de la taille du moufle (22).

3. Procédé selon l'une des revendications 1 ou 2, **caractérisé en ce que** la différence de température entre la chambre de combustion (28) et le moufle (20) est détectée et la capacité calorifique du moufle (20) est détectée sur la base du taux de variation de la température du moufle (20).

4. Procédé selon l'une des revendications précédentes, **caractérisé en ce que** la capacité calorifique du moufle (22) est détectée, sur la base du taux de variation de la température dans la chambre de combustion (28).

5. Procédé selon l'une des revendications précédentes, **caractérisé en ce que** la grandeur physique est détectée par le biais d'un capteur dans le four dentaire (10) et acheminée vers un dispositif de contrôle, pour la commande automatique du programme de traitement du four dentaire (10), en fonction de la grandeur détectée.

6. Procédé selon la revendication 1, **caractérisé en ce que** le moufle (22) est inséré dans le four dentaire à une température prédéterminée après avoir été chauffé dans un four de préchauffage.

7. Procédé selon l'une des revendications précédentes, **caractérisé en ce que** le four dentaire (10) est maintenue à une température de veille avant l'insertion du moufle (22) préchauffé et après l'insertion du moufle (22) le changement dans la température de la chambre de combustion (28) et en particulier le taux de variation est aussi détecté.

8. Procédé selon l'une des revendications précédentes, **caractérisé en ce que** le moufle (22) présente une température qui diverge de la température de veille du four dentaire (10) avant l'insertion dans la chambre de combustion (28), en particulier est plus élevée que celle-ci.

9. Procédé selon une des revendications précédentes, **caractérisé en ce que** la température relative entre la chambre de combustion (28) et le moufle préchauffé (22) est mesurée, où le taux de variation de la température de la chambre de cuisson relative à la différence de température détectée entre la chambre de combustion (28) et le moufle (20) est utilisé comme grandeur physique supplémentaire.

10. Procédé selon l'une des revendications précédentes, **caractérisé en ce qu'**au moins deux tailles différentes de moufle peuvent être utilisées, le programme de traitement étant automatiquement réglé sur la taille de moufle qui se rapproche le plus de la taille de moufle mesurée.

11. Procédé selon l'une des revendications précédentes, **caractérisé en ce que** la souplesse du lingotin en céramique (36) introduite dans le moufle (22) pressurisée par le dispositif de pression (32) est détectée par le biais d'un capteur de pression, et en fonction de celle-ci le réglage du programme de traitement est effectué.

12. Procédé selon l'une des revendications précédentes, **caractérisé en ce que** le déplacement entre une position initiale du dispositif de pressage (32) et la position actuelle du piston de pressage (34) est détecté au moyen d'un capteur de déplacement lorsqu'un lingotin en céramique (36) non pressé est inséré dans le moufle (22).

13. Procédé selon l'une des revendications précédentes, **caractérisé en ce que** la température de la chambre de combustion du four dentaire (10) est détectée d'une part avant l'insertion du moufle (22) et d'autre part après l'insertion du moufle (22), en particulier à une intervalle prédéterminée après l'insertion du moufle (22), et à partir de la variation de température et/ou du gradient de variation de la température la taille du moufle (22) est déterminée.

14. Procédé selon l'une des revendications précédentes, **caractérisé en ce que** la quantité de chaleur produite par le four dentaire apportée en complément dans un laps de temps donné afin d'augmenter la température de la chambre de cuisson avec le moufle (22) introduit dans la chambre de combustion (28) est détecté.
